# EUROPEAN PATENT APPLICATION

(11) **EP 4 835 864 A1**
(43) Date of publication of application: **04.11.2026**
(21) Application number: 23963126.0
(22) Date of filing: 27.12.2023
(51) Int. Cl.: G08G 7/00, G08G 1/00, G08G 5/00

(54) **FLYING WORK MACHINE, GROUND WORK MACHINE, AND WORK MANAGEMENT SYSTEM**

(71) Applicant: Kubota Corporation, Osaka 556-8601 (JP)
(72) Inventor: SAKAGUCHI, Kazuo, Sakai-shi, Osaka 590-0908 (JP); WADA, Hitoshi, Sakai-shi, Osaka 590-0908 (JP)
(74) Representative: Cabinet Beau de Loménie
(86) International application number: PCT/JP2023/046969
(87) International publication number: WO 2025/141777

(57) **Abstract**

A work management system for an aerial working machine (FW) and a ground working machine (GW) in a work site includes: a work flight information management unit (32) configured to manage work flight information including work flight characteristics of the aerial working machine (FW) that performs ground work on the work site; a work travel information management unit (33) configured to manage work travel information including work travel characteristics of the ground working machine (GW) in the work site; and a work management unit configured to manage work flight behavior of the aerial working machine (FW) and work travel behavior of the ground working machine (GW) based on the work flight information and the work travel information.

## Description

### Technical Field

The present invention relates to a work management system for an aerial working machine and a ground working machine in a work site.

### Background Art

Patent Document 1 discloses a farming system that manages ground work by working machines in a work site such as an agricultural field. In this farming system, an aerial working machine (drone) and ground working machines (a tractor, a rice transplanter, a fertilizer/chemical applicator, a harvester, and the like) are used as agricultural field working machines. This farming system includes: an agricultural work event management unit configured to manage event results in units of minute sections in various agricultural work events performed on an agricultural field divided into a plurality of minute sections; an agricultural work event planning unit configured to calculate recommended event contents in units of minute sections in an agricultural work event to be performed on the agricultural field; and an event content modification unit configured to modify the recommended event contents displayed on a monitor in units of minute sections based on user input.

### Prior Art Document

### Patent Document

Patent Document 1: JP 2019-128741A

### Summary of the Invention

### Problem to be Solved by the Invention

In the farming system according to Patent Document 1, work results of the aerial working machine (drone) and each of the ground working machines (rice transplanter, harvester, and the like) are managed in time series as results of agricultural work events. However, work flight behavior considering the work flight characteristics of the aerial working machine and work travel behavior considering the work travel characteristics of the ground working machine are not managed. In other words, although the results of the agricultural work events are managed in detail, information regarding how the agricultural work events were planned and how they were performed is not sufficiently managed.

In view of the above circumstances, in work for a work site performed with the use of an aerial working machine and a ground working machine, there is a desire for a work management system capable of managing behaviors of the aerial working machine and the ground working machine in the work, and for an aerial working machine and a ground working machine managed by such a work management system.

### Means for Solving Problem

A work management system according to the present invention for an aerial working machine and a ground working machine in a work site includes: a work flight information management unit configured to manage work flight information including work flight characteristics of the aerial working machine that performs ground work on the work site; a work travel information management unit configured to manage work travel information including work travel characteristics of the ground working machine in the work site; and a work management unit configured to manage work flight behavior of the aerial working machine and work travel behavior of the ground working machine based on the work flight information and the work travel information.

With this configuration, work flight behavior of the aerial working machine is managed based on work flight information including work flight characteristics of the aerial working machine that performs ground work on the work site, and work travel behavior of the ground working machine is managed based on work travel information including work travel characteristics of the ground working machine that performs ground work on the work site. For example, the aerial working machine performs work flight with work flight behavior that is appropriate, preferably optimal, for the ground work. Also, the ground working machine performs work travel with work travel behavior that is appropriate, preferably optimal, for the ground work. As a result, actual ground work on the work site is efficiently performed.

In the case of a ground working machine, a safety zone is set along a boundary line in order to prevent the ground working machine from crossing over a work site boundary line (the possibility of collision with a boundary object). In contrast, since an aerial vehicle flies above the boundary line, problems such as collision with a boundary object that defines the work site boundary line do not usually occur, and thus setting a safety zone, which is essential for a traveling working machine, is not required. Therefore, the aerial working machine can perform ground work in a ground work area where ground work is difficult for the ground working machine. Accordingly, in the present invention, it is proposed that the work travel information management unit manages a work travel difficulty section where work travel by the ground working machine in the work site is difficult, and the work management unit generates a flight route for the aerial working machine to perform work in the work travel difficulty section.

In ground work such as chemical spraying by the aerial working machine, a problem occurs in which chemicals widely disperse if flight altitude is high, and a problem occurs in which the aerial working machine comes into contact with the ground if it flies near the ground of the work site. Also, when a main road, a private house, or the like is located adjacent to the work site, the aerial working machine cannot approach the work site boundary line due to aviation regulations. Accordingly, in order to identify areas where ground work by the aerial working machine is restricted and to perform ground work efficiently, in the present invention, it is proposed that the work flight information management unit manages a work flight difficulty section where work flight by the aerial working machine in the work site is difficult, and the work management unit generates a travel route for the ground working machine to perform work in the work flight difficulty section. As a result, ground work that is difficult for the aerial working machine is performed by the ground working machine.

In agricultural work performed on an agricultural field as a work site, such as rice farming, a plurality of agricultural work processes (seedling transplanting or seeding, fertilization, weeding, and harvesting) are performed in time series. In a case where such different agricultural work processes are assigned to the ground working machine and the aerial working machine, efficient agricultural work can be performed if mutual work behavior is determined based on characteristics of work behavior by the ground working machine for a specific agricultural work process and characteristics of work behavior by the ground working machine for a different specific agricultural work process. For example, in one preferred embodiment of the present invention, the work travel behavior includes ground transplanting behavior in seedling transplanting work or ground seeding behavior in seeding work performed by the ground working machine, and the work management unit determines flight fertilization behavior in fertilization work or flight chemical spraying behavior in chemical spraying work performed by the aerial working machine based on the ground transplanting behavior or the ground seeding behavior.

In a more specific embodiment of the present invention, the ground transplanting behavior includes a transplanting amount per unit section in transplanting travel along planned rows, and the ground seeding behavior includes a seeding amount per unit area in seeding travel along the planned rows, the flight fertilization behavior includes a fertilization amount per unit area in fertilization flight along the rows, and the flight chemical spraying behavior includes a spraying amount per unit area in chemical spraying flight along the rows, and the work management unit determines the flight fertilization behavior or the flight chemical spraying behavior based on the ground transplanting behavior or the ground seeding behavior. With this configuration, the fertilization amount per unit area in fertilization flight is appropriately calculated according to the transplanting amount per unit area in transplanting travel or the seeding amount per unit area in seeding travel, and the flight fertilization behavior is set in such a manner that the fertilization amount is realized, and therefore efficient agricultural work can be performed.

Further, in another preferred embodiment of the present invention, the work flight behavior includes flight transplanting behavior in seedling transplanting work or flight seeding behavior in seeding work performed by the aerial working machine, and the work management unit determines ground harvesting behavior in harvesting work performed by the ground working machine, based on the flight transplanting behavior or the flight seeding behavior. With this configuration, ground harvesting behavior for harvesting work performed by the ground working machine is determined based on flight transplanting behavior when seedling transplanting work is performed by the aerial working machine or flight seeding behavior when seeding work is performed by the aerial working machine, and therefore harvesting control based on an expected harvest amount can be performed. In other words, by reflecting work behavior by the ground working machine performed in a specific agricultural work process (seedling transplanting or seeding) in work behavior by the ground working machine performed in a specific agricultural work process (harvesting), efficient agricultural work can be performed.

In a specific embodiment according to the present invention, the flight transplanting behavior includes a transplanting amount per unit area in transplanting flight along planned rows, the flight seeding behavior includes a seeding amount per unit area in seeding flight along the planned rows, and the work management unit determines an adjustment parameter for harvesting equipment per unit area in harvesting travel along the rows based on the flight transplanting behavior or the flight seeding behavior. With this configuration, an adjustment parameter (such as a harvesting width or a harvesting speed) for the harvesting equipment per unit area is determined based on a harvest amount distribution of agricultural crops estimated by the transplanting amount per unit area in the transplanting flight or the seeding amount per unit area in the seeding flight, and therefore efficient agricultural work can be performed.

In each process (seedling transplanting or seeding, fertilization, weeding, harvesting, etc.) constituting an agricultural work process, a preceding process affects a subsequent process. Therefore, as one embodiment for realizing efficient agricultural work, it is proposed that the work management unit determines the work travel behavior of the ground working machine that performs a preceding process in an agricultural work process of a specific crop, in order to make the work flight behavior of the aerial working machine that performs a subsequent process in the agricultural work process appropriate. Similarly, as one embodiment for realizing efficient agricultural work, it is proposed that the work management unit determines the work flight behavior of the aerial working machine that performs a preceding process in an agricultural work process of a specific crop, in order to make the work travel behavior of the ground working machine that performs a subsequent process in the agricultural work process appropriate. One of the methods for making the behavior appropriate here is optimization (selection of an optimal solution) under given conditions, but in a case where merits and demerits of the behavior are given probabilistically, sub-optimal behavior with smaller demerits may be adopted instead of behavior regarded as an optimal solution. For example, behavior may be selected in such a manner that a section where spraying cannot be performed in a chemical spraying area of the subsequent process is excluded from the seeding area of the preceding process.

Not only the work management system described above but also an aerial working machine that uses the work management system described above is a subject of the present invention. In one form of such an aerial working machine, the aerial working machine acquires the work flight behavior from the work management system, and performs work flight based on the work flight behavior. Furthermore, in another form of such an aerial working machine, the aerial working machine includes the aerial vehicle management system described above.

Not only the work management system described above but also a ground working machine that uses the work management system described above is a subject of the present invention. In one form of such a ground working machine, the ground working machine acquires the work travel behavior from the work management system, and performs work travel based on the work travel behavior. Furthermore, in another form of such a ground working machine, the ground working machine includes the aerial vehicle management system described above.

### Brief Description of the Drawings

FIG. 1 is a schematic view showing agricultural field work performed by an aerial working machine and traveling working machines managed by a work management system.
FIG. 2 is a flowchart showing a basic flow of management of agricultural field work performed by an aerial working machine and a traveling working machine.
FIG. 3 is a functional block diagram showing functional units in a flight and travel management computer, an aerial working machine, and a traveling working machine.
FIG. 4 is an information flow diagram showing a flow of information in the flight and travel management computer.
FIG. 5 is a schematic diagram showing a schematic configuration of management of agricultural field work performed by an aerial working machine and a traveling working machine.
FIG. 6 is a schematic view showing creation of an agricultural field work plan for an aerial working machine and a traveling working machine.

### Best Mode for Carrying out the Invention

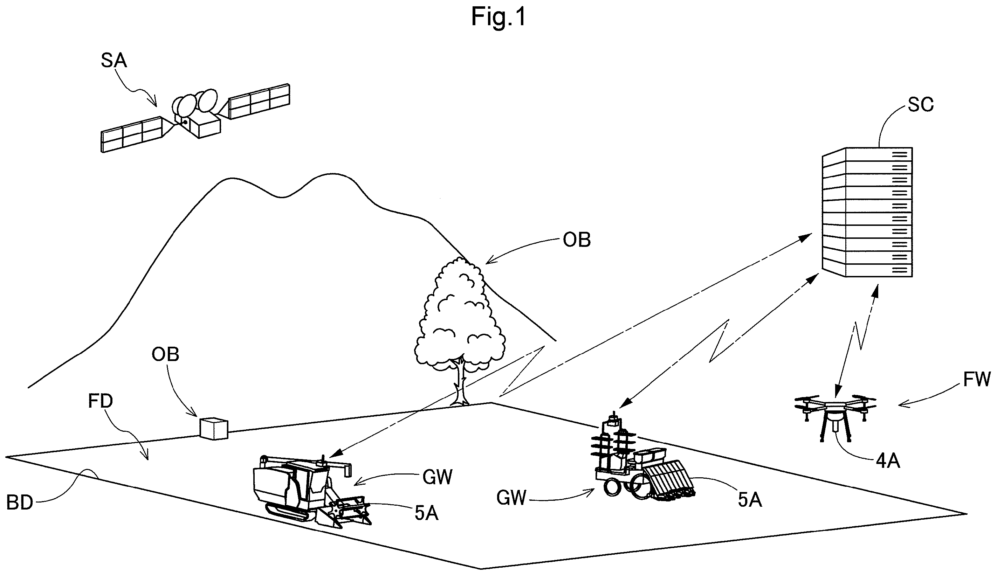

FIG. 1 shows an aerial working machine FW and ground working machines GW that perform ground work on an agricultural field as a work site. Here, the aerial working machine FW is a chemical sprayer with a chemical spraying device mounted on the body thereof. The aerial working machine FW can perform various types of work flight with the use of various working devices 4A mounted on the body thereof. For example, if the aerial working machine FW is equipped with a mowing device (weeding device), the aerial working machine FW functions as a flying mower. Of course, a dedicated aerial working machine FW for aerial work may be used. Further, the body of the aerial working machine FW and the working device 4A do not have to be rigidly connected to each other, and may be connected by a rope, a chain, or a link. In that case, the working device 4A may be self-propelled, and when necessary, the aerial working machine FW lifts up the working device 4A, thereby enabling the working device 4A to change direction and avoid obstacles. The ground work performed by the aerial working machine FW that performs work flight over the agricultural field includes spraying of chemicals (including fertilizers), seedling transplanting, seeding, weeding (including mowing), harvesting, and the like.

In FIG. 1, a rice transplanter and a combine are shown as ground working machines GW equipped with working devices 5A, but ground working machines GW also include another machine such as a tractor. The aerial working machine FW and the ground working machines GW can simultaneously perform ground work on the same agricultural field, but they are generally used at different stages of crop growth.

The aerial working machine FW and the ground working machines GW each can perform automatic flight (automatic travel) along a target route (target path) by calculating its own machine position based on a signal from a positioning satellite SA.

As shown in FIG. 1, an agricultural field as a work target area is bounded by boundary lines BD such as ridges, and obstacles OB are present in or around the agricultural field. In this embodiment, a work management system that manages ground work on the agricultural field performed by the aerial working machine FW and the ground working machines GW is constructed in a remote service computer SC, but it may be constructed in a computer owned by an agricultural field administrator.

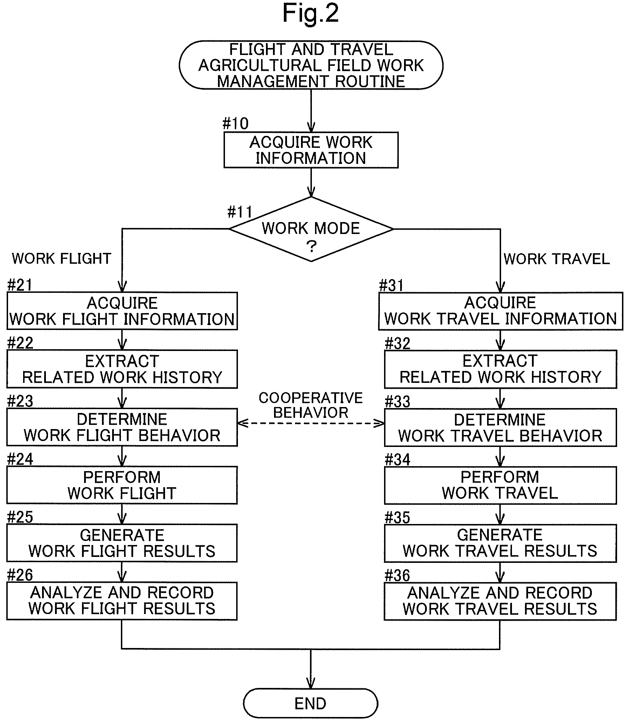

FIG. 2 shows an example of a flight and travel agricultural field work management routine performed by the work management system. Flight work by an aerial working machine FW and traveling work by a ground working machine GW are managed through this flight and travel agricultural field work management routine. As a preliminary step, in this work management system, an agricultural work plan is created by a farmer, who has accessed the work management system, entering necessary data according to work plan guidance presented to the farmer. Furthermore, work information is created based on the created agricultural work plan. Of course, an agricultural work plan or work information that is created by an external cloud service or a farmer and uploaded to the service computer SC may be adopted. The work information includes details of ground work for a work target agricultural field. When the flight and travel agricultural field work management routine starts, such work information is acquired (#10). First, based on the acquired work information, it is checked whether the work mode is a work flight (ground work by the aerial working machine FW) or a work travel (ground work by the ground working machine GW) (#11).

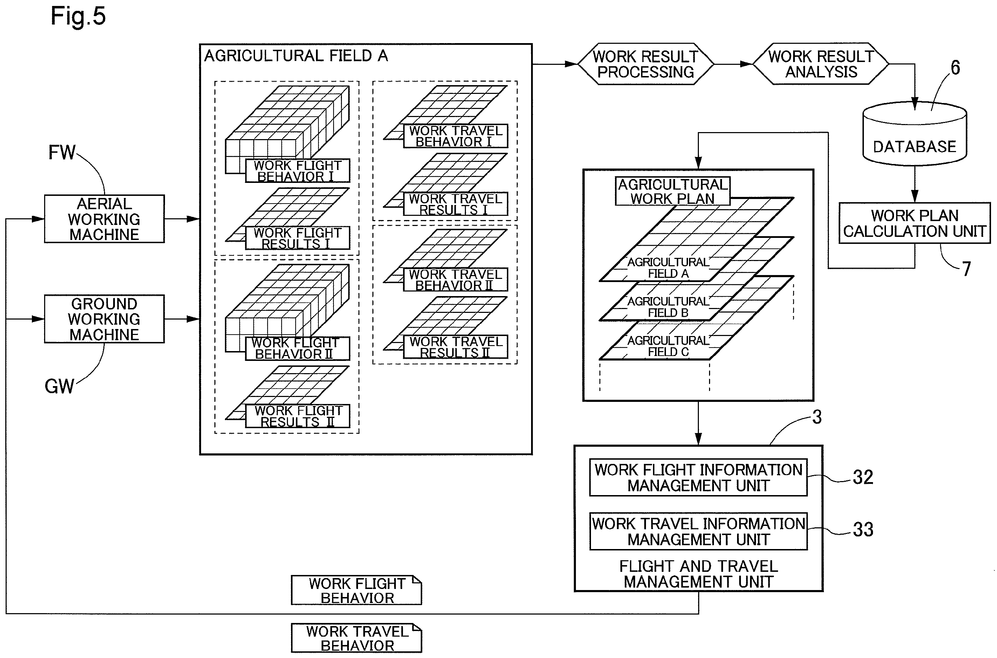

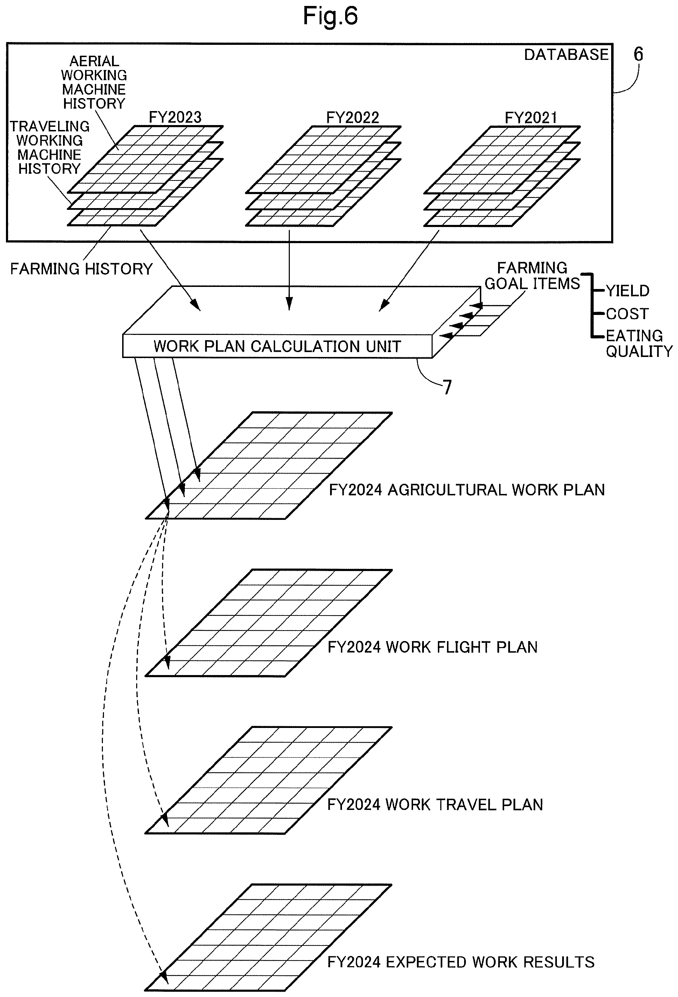

If the work mode is a work flight, work flight information is acquired from the work information (#21). Next, if history information of work related to the acquired work flight information is stored in a database 6 of the service computer SC (see FIG. 5 and FIG. 6) or the like, such history information is extracted (#22). Here, the history information to be extracted is, for example, history information of work including not only work flights performed in the past but also work travels performed in the past in the same agricultural field. Further, planning information of the next agricultural field work to be performed in the same agricultural field can also be treated as future history information. Of course, the history information is not necessarily required, and thus if appropriate history information is not prepared, the processing in #22 is omitted.

Work flight behavior is determined based on the work flight information and the history information (#23). The actual work flight is performed based on the determined work flight behavior (#24). Work flight results are generated after completion of the actual work flight or as the work flight progresses (#25). The generated work flight results are analyzed and recorded (#26).

If the work mode is a work travel, work travel information is acquired from the work information (#31). If history information of work related to the acquired work travel information is stored in the database 6 of the service computer SC or the like, such history information is extracted (#32). Here, the history information to be extracted is, for example, history information of work including not only work travels performed in the past but also work flights performed in the past in the same agricultural field. Further, planning information of the next agricultural field work to be performed in the same agricultural field can also be treated as future history information. Here as well, the history information is not necessarily required, and thus if appropriate history information is not prepared, the processing in #32 is omitted.

Work travel behavior is determined based on the work travel information and the history information (#33). The actual work travel is performed based on the determined work travel behavior (#34). Work travel results are generated after completion of the actual work travel or as the work travel progresses (#35). The generated work flight results are analyzed and recorded (#36).

Work modes may include a work flight and a work travel that are performed simultaneously. That is, ground work for the agricultural field is performed by cooperative work between the aerial working machine FW and the ground working machines GW. In this cooperative work, the processing from #21 to #26 related to the work flight and the processing from #31 to #36 related to the work travel are performed in parallel. However, the processing for the work flight behavior in #23 and the processing for the work travel behavior in #33 are performed in coordination with each other, and a cooperative behavior between the aerial working machine FW and the ground working machines GW is determined.

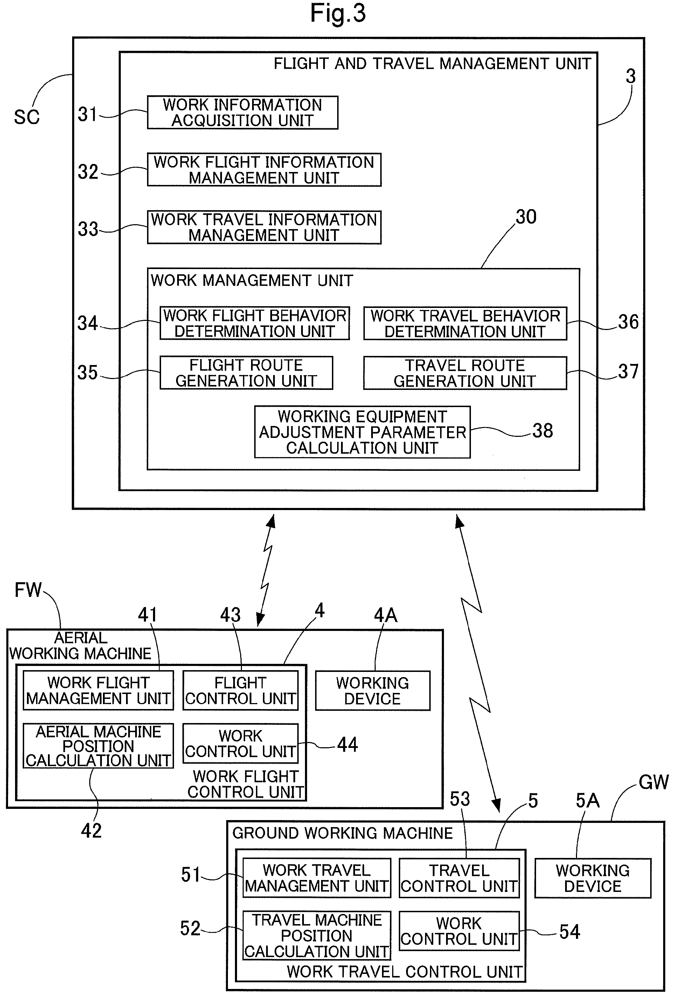

FIG. 3 is a functional block diagram showing functional units of a flight and travel management unit 3 provided in the service computer SC constituting the work management system, functional units of a work flight control unit 4 of the aerial working machine FW, and functional units of a work travel control unit 5 of a ground working machine GW.

The flight and travel management unit 3 includes a work information acquisition unit 31, a work flight information management unit 32, a work travel information management unit 33, and a work management unit 30. The work information acquisition unit 31 acquires the above-described work information. The work information may be, for example, information generated by a server computer capable of exchanging data with the flight and travel management unit 3 or a personal computer of a farmer and transferred to the flight and travel management unit 3. Of course, the work information may be created in another computer system in the service computer SC. The work flight information management unit 32 manages work flight information including work flight characteristics of the aerial working machine FW that performs ground work for a work site. The work flight characteristics include a work width, a work speed, a relationship between a position in the work site where the ground work is being performed and a flight position of the aerial working machine FW at that time, an allowable flight altitude and a flight speed during a non-work flight such as a direction change or obstacle avoidance, and the like. The work travel information management unit 33 manages work travel information including work travel characteristics of the ground working machines GW in the work site. The work travel characteristics include a work width, a work speed, allowable travel routes during non-work such as a direction change or obstacle avoidance, and the like. The work management unit 30 determines and manages a work flight behavior of the aerial working machine FW and a work travel behavior of the ground working machines GW based on the work flight information and the work travel information.

The work management unit 30 includes a work flight behavior determination unit 34, a work travel behavior determination unit 36, a flight route generation unit 35, a travel route generation unit 37, and a working equipment adjustment parameter calculation unit 38.

The work travel information management unit 33 manages a work travel difficulty section where work travel by the ground working machines GW in the work site is difficult. The flight route generation unit 35 of the work management unit 30 not only generates a flight route for the work flight of the aerial working machine FW, but also generates a flight route for the aerial working machine FW to perform the work flight for the ground work of the work travel difficulty section instead of the ground working machines GW.

The work flight information management unit 32 manages a work flight difficulty section where work flight by the aerial working machine FW in the work site is difficult. The travel route generation unit 37 of the work management unit 30 not only generates a travel route for the work travel of the ground working machines GW, but also generates travel routes for the ground working machines GW to perform the work travel for the ground work of the work flight difficulty section instead of the aerial working machine FW.

The work travel behavior determined by the work travel behavior determination unit 36 includes a ground transplanting behavior in seedling transplanting work or a ground seeding behavior in seeding work performed by the ground working machines GW. The work flight behavior determination unit 34 can determine a flight fertilization behavior in a fertilization work or a flight chemical spraying behavior in a chemical spraying work performed by the aerial working machine FW in such a manner as to reflect the ground transplanting behavior or the ground seeding behavior performed by the ground working machines GW.

Specific examples are as follows. The ground transplanting behavior includes a transplanting amount per unit area in transplanting travel along planned rows, and the ground seeding behavior includes a seeding amount per unit area in seeding travel along planned rows. The flight fertilization behavior includes a fertilization amount per unit area in fertilization flight along rows, and the flight chemical spraying behavior includes a spraying amount per unit area in chemical spraying flight along rows. In such a case, the work flight behavior determination unit 34 can determine the flight fertilization behavior or the flight chemical spraying behavior in such a manner as to reflect the ground transplanting behavior or the ground seeding behavior.

In addition, the work flight behavior determined by the work flight behavior determination unit 34 includes a flight transplanting behavior in seedling transplanting work or a flight seeding behavior in seeding work performed by the aerial working machine FW. The work travel behavior determination unit 36 can determine a ground harvesting behavior in a harvesting work performed by the ground working machines GW in such a manner as to reflect the flight transplanting behavior or the flight seeding behavior performed by the aerial working machine FW.

Specific examples are as follows. The flight transplanting behavior includes a transplanting amount per unit area in transplanting flight along planned rows, and the flight seeding behavior includes a seeding amount per unit area in seeding flight along planned rows. The ground fertilization behavior includes a fertilization amount per unit area in fertilization travel along rows, and the ground chemical spraying behavior includes a spraying amount per unit area in chemical spraying travel along rows. In such a case, the work travel behavior determination unit 36 can determine the ground fertilization behavior or the ground chemical spraying behavior in such a manner as to reflect the flight transplanting behavior or the flight seeding behavior.

The working equipment adjustment parameter calculation unit 38 calculates adjustment parameters for control equipment of the working device 4A equipped in the aerial working machine FW based on the determined work flight behavior, and calculates adjustment parameters for control equipment of the working devices 5A equipped in the ground working machines GW based on the determined work travel behavior. For example, the working equipment adjustment parameter calculation unit 38 determines adjustment parameters for harvesting equipment per unit area in harvesting travel along rows by the ground working machines GW based on the flight transplanting behavior or the flight seeding behavior.

The processing performed by the work management unit 30 described above is summarized as follows:
(1) The work management unit 30 determines the work travel behavior of the ground working machines GW that perform a preceding process in an agricultural work process of a specific crop to be processed, in order to make the work flight behavior of the aerial working machine FW that performs a subsequent process in the agricultural work process appropriate, preferably optimal.
(2) The work management unit 30 determines the work flight behavior of the aerial working machine FW that performs a preceding process in the agricultural work process of the specific crop to be processed, in order to make the work travel behavior of the ground working machines GW that perform a subsequent process in the agricultural work process appropriate, preferably optimal.

In order to perform the work flight behavior as described above, the aerial working machine FW equipped with the working device 4A includes the work flight control unit 4, and this work flight control unit 4 includes a work flight management unit 41, an aerial machine position calculation unit 42, a flight control unit 43, and a work control unit 44. The ground working machines GW equipped with the working devices 5A each include the work travel control unit 5, and this work travel control unit 5 includes a work travel management unit 51, a travel machine position calculation unit 52, a travel control unit 53, and a work control unit 54.

The work flight management unit 41 interprets the work flight behavior received from the flight and travel management unit 3 to generate work flight behavior data. The aerial machine position calculation unit 42 calculates its own machine position based on satellite navigation and inertial navigation, and provides the calculated position to the flight control unit 43 and the work control unit 44. The flight control unit 43 performs flight control based on the calculated own machine position and the work flight behavior data such as a flight route. The work control unit 44 provides a work control signal to the working device 4A based on the calculated own machine position and the work flight behavior data such as a work amount assigned to a flight position.

The work travel management unit 51 interprets the work travel behavior received from the flight and travel management unit 3 to generate work travel behavior data. The travel machine position calculation unit 52 calculates its own machine position based on satellite navigation and inertial navigation, and provides the calculated position to the travel control unit 53 and the work control unit 54. The travel control unit 53 performs travel control based on the calculated own machine position and the work travel behavior data such as a travel route. The work control unit 54 provides a work control signal to the working device 5A based on the calculated own machine position and the work travel behavior data such as a work amount assigned to a travel position.

The flight and travel management unit 3, the work flight control unit 4 of the aerial working machine FW, and the work travel control units 5 of the ground working machines GW are capable of exchanging data with each other via a communication line. The flight and travel management unit 3 may be implemented in either the aerial working machine FW or the ground working machines GW. The flight and travel management unit 3, the work flight control unit 4 of the aerial working machine FW, and the work travel control units 5 of the ground working machines GW are substantially constituted by computer systems. Each functional unit implemented in those computer systems can be realized by coordination between hardware associated with each computer system and a program installed in each computer system. Of course, in a specific functional unit, the function thereof may be realized by only hardware or only a program, or may be realized by coordination with an external application server.

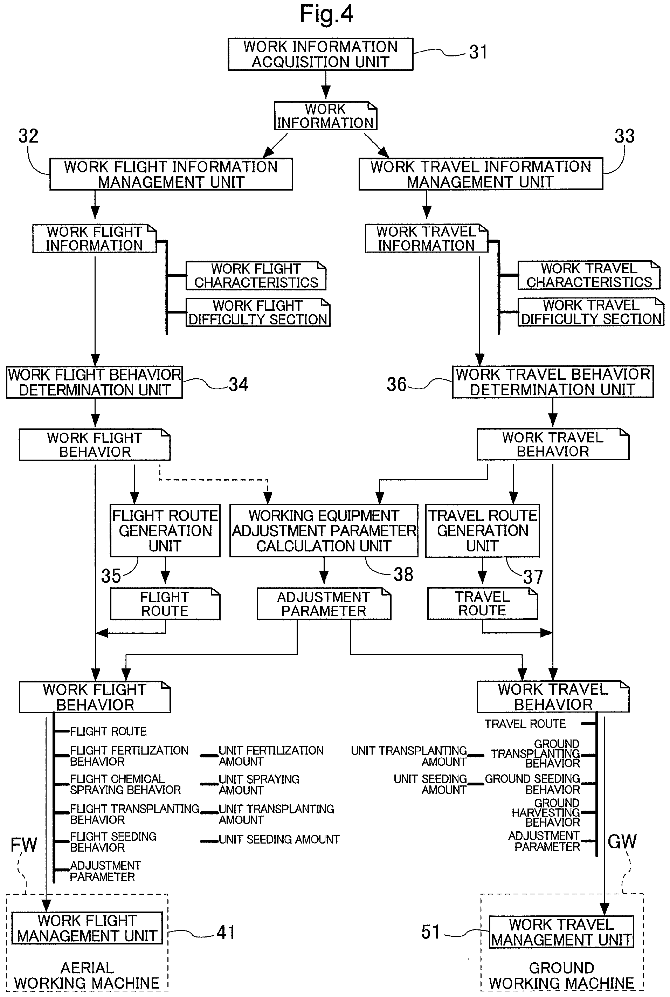

Next, a process of generating the work flight behavior and the work travel behavior in the flight and travel management unit 3 will be described with reference to FIG. 4.

First, the work information acquired by the work information acquisition unit 31 is provided to the work flight information management unit 32 and the work travel information management unit 33. The work information is constituted by an agricultural field file (data set) regarding an agricultural field (work target area) to be worked and a work file (data set) regarding work content. The agricultural field file includes an agricultural field ID, a position of the agricultural field on a map, an agricultural field shape, information regarding ridges, entrances, exits, and obstacles OB around the agricultural field, crop information of an adjacent agricultural field, and the like. The work file includes a work ID, work content, a work width, a work speed, and the like.

The work flight information management unit 32 selects an aerial working machine FW suitable for work flight based on the work information, generates work flight information serving as a prerequisite for the work flight, and provides the work flight information to the work flight behavior determination unit 34. The work flight information includes work flight characteristics, work flight difficulty sections, and the like. Similarly, the work travel information management unit 33 selects a ground working machine GW suitable for work travel based on the work information, generates work travel information serving as a prerequisite for the work travel, and provides the work travel information to the work travel behavior determination unit 36. The work travel information includes work travel characteristics, work travel difficulty sections, and the like.

The work flight behavior determination unit 34 determines work flight behavior based on the work flight information. At this time, the flight route generation unit 35 generates a flight route based on the work flight behavior and adds the flight route to the work flight behavior, and the working equipment adjustment parameter calculation unit 38 calculates adjustment parameters for the working device 4A of the aerial working machine FW based on the work flight behavior and adds the adjustment parameters to the work flight behavior.

Ultimately, the work flight behavior to be transmitted to the aerial working machine FW includes a flight route, flight fertilization behavior (for example, a fertilization amount per unit distance (unit area)), flight chemical spraying behavior (for example, a spraying amount per unit distance (unit area)), flight seeding behavior (for example, a seeding amount per unit distance (unit area)), adjustment parameters for the working device 4A, and the like, which are determined according to the work content. This work flight behavior is transmitted to the work flight management unit 41 of the aerial working machine FW.

The work travel behavior determination unit 36 determines work travel behavior based on the work travel information. At this time, the travel route generation unit 37 generates a travel route based on the work travel behavior and adds the travel route to the work travel behavior, and the working equipment adjustment parameter calculation unit 38 calculates adjustment parameters for the working device 5A of the ground working machine GW based on the work travel behavior and adds the adjustment parameters to the work travel behavior.

The work travel behavior to be transmitted to the ground working machine GW includes a travel route, ground transplanting behavior (for example, a transplanting amount per unit distance (unit area)), ground seeding behavior (for example, a seeding amount per unit distance (unit area)), ground harvesting behavior (for example, a travel speed), adjustment parameters for the working device 5A (for example, a reaping width or a reaping height in the case of a harvesting device), and the like, which are determined according to the work content. This work travel behavior is transmitted to the work flight management unit 41 of the ground working machine GW.

FIG. 5 is a schematic diagram showing a management mechanism of agricultural field work performed over time in a plurality of agricultural fields by an aerial working machine FW and a ground working machine GW. The work flight behavior performed by the aerial working machine FW and the work travel behavior performed by the ground working machine GW are processed as work results for each agricultural field and for each work period. These work results are analyzed, and the analysis results, together with the work results, are stored in the database 6 constructed in the service computer SC as an agricultural field work history file including an aerial working machine history and a traveling working machine history.

The agricultural field work history file stored in the database 6 is a file for each agricultural field and for each work period, and each history data is recorded on a plot-by-plot basis for the agricultural field. Examples of the types of the history data include a seedling transplanting amount, a fertilization amount, a growth status of a crop over time, a harvest amount, working equipment parameter values (adjustment parameter values) for the working device 4A of the aerial working machine FW and the working device 5A of the ground working machine GW, and the like.

The agricultural field work history file stored in the database 6 is used by a work plan calculation unit 7 that creates an agricultural work plan for the next agricultural work. The agricultural work plan for each agricultural field created by the work plan calculation unit 7 is transmitted to the flight and travel management unit 3 and is managed by the work flight information management unit 32 and the work travel information management unit 33.

FIG. 6 shows an outline of work plan creation processing performed with the use of the work plan calculation unit 7. An aerial working machine history, a traveling working machine history, and the like are read from an agricultural field work history file of a work target agricultural field (which may include similar agricultural fields) extracted from the database 6, and are provided to the work plan calculation unit 7 as input data for the work plan calculation unit 7. Furthermore, farming goal items are also provided to the work plan calculation unit 7 as input data. Examples of the farming goal items include yield, eating quality, cost, and the like. The work plan calculation unit 7 outputs an agricultural work plan for the next period based on the input data. The output agricultural work plan includes a work flight plan, a work travel plan, and expected work results when these plans are implemented.

The work plan calculation unit 7 described above can be constructed based on principles of rule-based AI or machine learning AI. When the work flight plan and the work travel plan are approved, work information is generated based on the approved work flight plan and work travel plan, and is provided to the flight and travel management unit 3.

### Alternative Embodiments

(1) Although the above embodiment describes a mode in which ground work is performed on one agricultural field (work site) with the use of a single aerial working machine FW, a single ground working machine GW, or both, the work management system according to the present invention may be in a mode in which ground work is performed with the use of a plurality of aerial working machines FW, a plurality of ground working machines GW, or both, which perform work flight or work travel in one agricultural field (work site). In this case, the aerial working machines FW and the ground working machines GW may perform the same work, or may perform different kinds of work (for example, seedling transplanting, seeding, fertilization, and chemical spraying).
(2) In the embodiment described above, the aerial working machine FW and the ground working machine GW perform work flight or work travel based on the work flight behavior and the work travel behavior transmitted from the flight and travel management unit 3, which is a core element of the work management system. Alternatively, either the aerial working machine FW or the ground working machine GW may include the flight and travel management unit 3, or at least one functional unit of the flight and travel management unit 3 may be included in the aerial working machine FW or the ground working machine GW flying body.
(3) Although the aerial working machine FW and the ground working machine GW are basically under unmanned operation in the embodiment described above, remote control operation or manual operation by an operator riding the machine may be performed, at least partially. In this case, the machine is operated via the remote control operation based on the work flight behavior or the work travel behavior received from the flight and travel management unit 3. It is advantageous to enable emergency operation of the machine, such as obstacle avoidance flight, to be performed even via remote control operation.
(4) The ground work used in the present invention includes not only work that acts directly on a work site but also work that acts on an object provided in the work site, or the like. For example, in a case where the work site is agricultural land, the ground work includes not only tilling work, seedling transplanting work, and chemical spraying work that act on the agricultural land itself, but also harvesting work (harvesting of rice, wheat, vegetables, fruit, or the like) of crops grown on the agricultural land, monitoring work of the crops grown on the agricultural land, and the like.

Note that the configurations disclosed in the above-described embodiments (including alternative embodiments, the same applies hereinafter) can be applied in combination with configurations disclosed in other embodiments as long as no contradiction arises. Further, the embodiments disclosed in the present specification are illustrative, and the embodiments of the present invention are not limited thereto, and can be modified as appropriate without departing from the object of the present invention.

### Industrial Applicability

The present invention is applicable to a technology for managing an aerial working machine FW that performs work flight over a work site such as an agricultural field and a ground working machine GW that performs work travel.

### Description of Reference Signs

- 3: Flight and Travel Management Unit
- 4: Work Flight Control Unit
- 5: Work Travel Control Unit
- 7: Work Plan Calculation Unit
- 30: Work Management Unit
- 31: Work Information Acquisition Unit
- 32: Work Flight Information Management Unit
- 33: Work Travel Information Management Unit
- 34: Work Flight Behavior Determination Unit
- 35: Flight Route Generation Unit
- 36: Work Travel Behavior Determination Unit
- 37: Travel Route Generation Unit
- 38: Working Equipment Adjustment Parameter Calculation Unit
- 41: Work Flight Management Unit
- 42: Aerial Machine Position Calculation Unit
- 43: Flight Control Unit
- 44: Work Control Unit
- 51: Work Travel Management Unit
- 52: Travel Machine Position Calculation Unit
- 53: Travel Control Unit
- 54: Work Control Unit
- FW: Aerial Working Machine
- GW: Ground Working Machine
- SC: Service Computer

## Claims

1. A work management system for an aerial working machine and a ground working machine in a work site, the work management system comprising:
a work flight information management unit configured to manage work flight information including work flight characteristics of the aerial working machine that performs ground work on the work site;
a work travel information management unit configured to manage work travel information including work travel characteristics of the ground working machine in the work site; and
a work management unit configured to manage work flight behavior of the aerial working machine and work travel behavior of the ground working machine based on the work flight information and the work travel information.

2. The work management system according to claim 1,
wherein the work travel information management unit manages a work travel difficulty section where work travel by the ground working machine in the work site is difficult, and
the work management unit generates a flight route for the aerial working machine to perform work on the work travel difficulty section.

3. The work management system according to claim 1,
wherein the work flight information management unit manages a work flight difficulty section where work flight by the aerial working machine in the work site is difficult, and
the work management unit generates a travel route for the ground working machine to perform work on the work flight difficulty section.

4. The work management system according to claim 1,
wherein the work travel behavior includes ground transplanting behavior in seedling transplanting work or ground seeding behavior in seeding work performed by the ground working machine, and
the work management unit determines flight fertilization behavior in fertilization work or flight chemical spraying behavior in chemical spraying work performed by the aerial working machine, based on the ground transplanting behavior or the ground seeding behavior.

5. The work management system according to claim 4,
wherein the ground transplanting behavior includes a transplanting amount per unit area in transplanting travel along planned rows, and the ground seeding behavior includes a seeding amount per unit area in seeding travel along the planned rows,
the flight fertilization behavior includes a fertilization amount per unit area in fertilization flight along the rows, and the flight chemical spraying behavior includes a spraying amount per unit area in chemical spraying flight along the rows, and
the work management unit determines the flight fertilization behavior or the flight chemical spraying behavior based on the ground transplanting behavior or the ground seeding behavior.

6. The work management system according to claim 1,
wherein the work flight behavior includes flight transplanting behavior in seedling transplanting work or flight seeding behavior in seeding work performed by the aerial working machine, and
the work management unit determines ground harvesting behavior in harvesting work performed by the ground working machine, based on the flight transplanting behavior or the flight seeding behavior.

7. The work management system according to claim 6,
wherein the flight transplanting behavior includes a transplanting amount per unit area in transplanting flight along planned rows, and the flight seeding behavior includes a seeding amount per unit area in seeding flight along the planned rows, and
the work management unit determines an adjustment parameter for harvesting equipment per unit area in harvesting travel along the rows based on the flight transplanting behavior or the flight seeding behavior.

8. The work management system according to claim 1,
wherein the work management unit determines the work travel behavior of the ground working machine that performs a preceding process in an agricultural work process of a specific crop, in order to make the work flight behavior of the aerial working machine that performs a subsequent process in the agricultural work process appropriate.

9. The work management system according to claim 1,
wherein the work management unit determines the work flight behavior of the aerial working machine that performs a preceding process in an agricultural work process of a specific crop, in order to make the work travel behavior of the ground working machine that performs a subsequent process in the agricultural work process appropriate.

10. An aerial working machine configured to acquire the work flight behavior from the work management system according to any one of claims 1 to 9, and to perform work flight based on the work flight behavior.

11. A ground working machine configured to acquire the work travel behavior from the work management system according to any one of claims 1 to 9, and to perform work travel based on the work travel behavior.
